# EUROPÄISCHE PATENTSCHRIFT

(11) **EP 3 947 501 B1**
(45) Veröffentlichungstag und Bekanntmachung des Hinweises auf die Patenterteilung: **12.07.2023**
(21) Anmeldenummer: 20713919.7
(22) Anmeldetag: 31.03.2020
(51) Int. Cl.: B29C 44/32, B29K 75/00, C08G 18/18, C08J 9/00, F16L 59/14, B29C 44/02, C08J 9/14, C08G 18/09, C08G 18/42, C08G 18/40, C08G 18/76, C08G 18/50, C08G 18/48, C08G 18/02, C08G 18/16, C08G 18/20, C08G 18/22

(54) **GEDÄMMTES ROHR, ENTHALTEND MIT UMWELTFREUNDLICHEM TREIBMITTEL GETRIEBENEN POLYURETHAN-SCHAUMSTOFF MIT GERINGER SPRÖDIGKEIT**
INSULATED PIPE, COMPRISING AN ENVIRONMENTALLY-FRIENDLY PROPELLANT BLOWN POLYURETHANE FOAM WITH LOW FRIABILITY
TUBE ISOLÉ CONTENANT DE LA MOUSSE DE POLYURÉTHANE PEU FRAGILE EXPANSÉE À L'AIDE D'UN AGENT D'EXPANSION RESPECTUEUX DE L'ENVIRONNEMENT

(30) Priorität: 02.04.2019 EP 19166869
(43) Veröffentlichungstag der Anmeldung: 09.02.2022
(73) Patentinhaber: BASF SE, 67056 Ludwigshafen am Rhein (DE)
(72) Erfinder: TOMASI, Gianpaolo, 49448 Lemfoerde (DE); LAUBGAN, Roman, 49448 Lemfoerde (DE); POPOV, Alex, 49448 Lemfoerde (DE); ELLERSIEK, Carsten, 49448 Lemfoerde (DE); GRIESER-SCHMITZ, Christof, 49448 Lemfoerde (DE)
(74) Vertreter: BASF IP Association
(86) Internationale Anmeldenummer: PCT/EP2020/059178
(87) Internationale Veröffentlichungsnummer: WO 2020/201312

(56) Entgegenhaltungen:
- EP-A1- 1 141 613
- WO-A1-2018/219916
- DATABASE WPI Week 201542 Thomson Scientific, London, GB; AN 2015-34047Y XP002794572, & CN 104 497 251 A (SHANGHAI DONGDA POLYURETHANE CO LTD) 8. April 2015 (2015-04-08) in der Anmeldung erwähnt

## Beschreibung

Die vorliegende Erfindung betrifft Verfahren zur Herstellung eines mit Polyurethanschaumstoff gedämmten Rohres, bei dem man (a) Isocyanate mit (b) Polyolen, (c) Treibmittel, enthaltend mindestens eine aliphatische, halogenierte Kohlenwasserstoffverbindung (c1), aufgebaut aus 2 bis 5 Kohlenstoffatomen, mindestens einem Wasserstoffatom und mindestens einem Fluor und/oder Chloratom, wobei die Verbindung (c1) mindestens eine Kohlenstoff-Kohlenstoff-Doppelbindung enthält, (d) Katalysator, enthaltend N,N-Dialkylbenzylamin, gegebenenfalls (e) Kettenverlängerungs- und/oder Vernetzungsmittel und gegebenenfalls (f) Hilfs- und Zusatzstoffe, zu einer Reaktionsmischung vermischt, die Reaktionsmischung auf ein Mediumrohr aufträgt und zum Polyurethanschaumstoff aushärten lässt. Weiter betrifft die vorliegende Erfindung ein gedämmtes Rohr, erhältlich nach einem solchen Verfahren und die Verwendung eines solchen gedämmten Rohres als gedämmtes Verbundmantelrohr für erdverlegte Fernwärme- oder Fernkühlnetze.

Auch mit Polyurethanschaumstoffen gedämmte Rohre sind im Stand der Technik bekannt und beispielsweise in EP 1 141 613 B1, EP A 865 893, EP 1 777 051 B1, EP 1 595 904 A2, WO 00/39497, WO 01/18087 A1, EP 2 143 539 A1 und EP 1 428 848 B1 beschrieben. Gedämmte Rohrleitungssysteme werden aus einzelnen Rohrsegmenten zusammengefügt. Standardmäßig werden hierfür Rohrlängen von 6 m, 12 m und 16 m verwendet. Benötigte Überhanglängen werden speziell gefertigt oder aus bestehender Konfektionsware zugeschnitten. Die einzelnen Rohrsegmente werden verschweißt und mit bestehender Muffenmontagetechnik im Bereich der Schweißnaht nachgedämmt. Diese Muffenverbindungen bergen ein größeres Schadenspotential als die Rohrware selbst. Dieser Unterschied resultiert aus der Tatsache, dass die Rohrlängen unter festgelegten, kontrollierten Bedingungen in Produktionshallen hergestellt werden. Die Muffenverbindungen werden oft unter Zeitdruck bei Wind und Wetter vor Ort auf der Baustelle hergestellt. Einflüsse wie Temperatur, Verschmutzungen und Feuchtigkeit beeinflussen oft die Qualität der Muffenverbindungen. Weiterhin stellt die Zahl der Muffenverbindungen einen großen Kostenfaktor bei der Installation von Rohrleitungssystemen dar.

Der größte Teil der Einzelrohre wird mit Hilfe der diskontinuierlichen Rohr-in-Rohr Produktionstechnik hergestellt. Im Rahmen dieses Verfahrens wird das Mediumrohr, im Allgemeinen aus Stahl, mit sternförmigen Abstandshaltern versehen, die der Zentrierung des inneren Rohres dienen. Das Mediumrohr wird in das äußere Mantelrohr, im Allgemeinen aus Polyethylen, geschoben, so dass sich ein Ringspalt zwischen beiden Rohren ergibt. Dieser Ringspalt wird aufgrund seiner hervorragenden Dämmeigenschaften mit Polyurethanschaum gefüllt. Hierfür wird das leicht geneigte Doppelrohr mit Abschlusskappen versehen, die mit Entlüftungslöchern ausgestattet sind. Anschließend wird in den Ringspalt mittels einer Polyurethandosiermaschine das flüssige Reaktionsgemisch eingefüllt, welches in noch flüssiger Form im Rohrspalt hinunter fließt bis die Reaktion einsetzt. Ab diesem Zeitpunkt findet die weitere Verteilung durch Fließen des langsam in der Viskosität ansteigenden Schaums statt, bis das Material ausreagiert ist. Ein solches Verfahren ist beispielsweise beschrieben in WO 2013030203 und WO 2018219916.

Es ist bekannt, dass in der Polyurethanschaumindustrie chemische und/oder physikalische Treibmittel zum Aufschäumen des sich gleichzeitig bildenden Polymers verwendet werden. Chemische Treibmittel sind solche, die mit der Isocyanat-Komponente unter Bildung eines Gases reagieren, während physikalische Treibmittel einen niedrigen Siedepunkt aufweisen, der durch den Temperaturanstieg des exotherm reagierenden Reaktionsgemisches erreicht wird und so in den gasförmigen Zustand übergehen.

In der Vergangenheit nutzte man als physikalisches Treibmittel primär Fluorchlorkohlenwasserstoffe. Diese sind jedoch aufgrund der ozonschichtschädigenden Wirkung in weiten Teilen der Welt mittlerweile verboten. Heutzutage werden primär fluorierte Kohlenwasserstoffe HFCs und Kohlenwasserstoffe mit einem niedrigen Siedepunkt, wie Pentane, als physikalische Treibmittel verwendet.

Ein Problem bei der Verwendung von Alkanen als Treibmittel ist deren Brennbarkeit. Durch diese Brennbarkeit sind alkan-haltige Polyolkomponenten bereits bei geringen Alkangehalten leicht brennbar, was besondere Anforderungen an die Verarbeitungsbedingungen mit sich bringt. Ferner kann ein Teil des Pentans während des Verschäumvorganges freigesetzt werden. Das dadurch entstehende Explosionsrisiko erfordert hohe Investitionen in Sicherheitseinrichtungen.

Fluorierte Kohlenwasserstoffe (HFCs) kommen immer dann zum Einsatz, wenn die Investitionen in diese Sicherheitseinrichtungen, um Kohlenwasserstoffe als physikalische Treibmittel sicher zu verwenden, zu hoch oder apparativ nicht umsetzbar sind. HFC weisen zusätzlich noch einen weiteren Vorteil gegenüber den Kohlenwasserstoffen auf, da sie zu Schaumstoffen mit höherer Dämmwirkung führen können. HFCs sind jedoch aufgrund ihres Beitrags zur Erderwärmung, d.h. ihres hohen "Global Warming Potentials", aus Umweltgesichtspunkten in der Kritik und werden deswegen auch in der EU bis Ende 2022 ausgephast.

Bevorzugte physikalische Treibmittel weisen somit ein niedriges Global Warming Potential auf. Dieses ist der Vorteil der halogenierten Olefine, den sogenannten HFOs. Der Einsatz dieser Treibmittel führt aber bei der Herstellung von Rohren zu Schaumstoffen mit einer hohen Sprödigkeit, insbesondere an den Rohrenden. Daraus ergibt sich eine erhöhte Empfindlichkeit des Schaums, was bereits bei geringen Belastungen zur Zerstörung des Schaums, beispielsweise zu Rissbildung im Schaum führen kann. Besonders anfällig für Sprödigkeit sind dabei die Rohrenden, unmittelbar an den Abschlusskappen, hier kann es auch beim Entfernen der Rohrkappen zum Abreißen von Schaumteilen und deren Anhaftung an den Rohrkappen kommen.

CN 104497251 beschreibt die Isolierung von Rohren mit Polyisocyanuratschaumstoff, der als Block geschäumt und anschließend passend für die Rohre ausgeschnitten wird. Als Treibmittel können halogenierte Olefine und als Katalysator wird bevorzugt eine Kombination, enthaltend N,N-Dimethylbenzylamin eingesetzt. Der Polyisocyanuratschaumstoff ist durch die zusätzliche Vernetzung über Isocyanuratgruppen aber sehr spröde und besitzt schlechte Fließeigenschaften. Daher eignet er sich nicht zum direkten Verschäumen eines Mantelrohrs mit wirtschaftlich bevorzugt niedriger Gesamtrohdichte.

Aufgabe der vorliegenden Erfindung war es daher, ein mit Polyurethanschaumstoff gedämmtes Rohr zu liefern, wobei als Treibmittel besonders umweltfreundliche halogenierte Olefine eingesetzt werden und der erhaltene Polyurethanschaumstoff eine geringe Sprödigkeit aufweist.

Die erfindungsgemäße Aufgabe wurde gelöst durch ein mit Polyurethanschaumstoff gedämmten Rohres, erhältlich nach einem Verfahren, bei dem man (a) Isocyanate mit (b) Polyolen, (c) Treibmittel, enthaltend mindestens eine aliphatische, halogenierte Kohlenwasserstoffverbindung (c1), aufgebaut aus 2 bis 5 Kohlenstoffatomen, mindestens einem Wasserstoffatom und mindestens einem Fluor und/oder Chloratom, wobei die Verbindung (c1) mindestens eine Kohlenstoff-Kohlenstoff-Doppelbindung enthält, (d) Katalysator, enthaltend N,N-Dialkylbenzylamin, gegebenenfalls (e) Kettenverlängerungs- und/oder Vernetzungsmittel und gegebenenfalls (f) Hilfs- und Zusatzstoffe, zu einer Reaktionsmischung vermischt, die Reaktionsmischung auf ein Mediumrohr aufträgt und zum Polyurethanschaumstoff aushärten lässt.

Vorzugsweise erfolgt die Herstellung erfindungsgemäßer Rohre indem man (A) ein Mediumrohr und ein Mantelrohr bereitstellt, wobei das Mediumrohr innerhalb des Mantelrohres angeordnet ist und zwischen Mediumrohr und Mantelrohr ein Ringspalt ausgebildet wird, (B) die erfindungsgemäße Polyurethanreaktionsmischung in den Ringspalt gibt und (C) die Polyurethanreaktionsmischung im Ringspalt zum Polyurethanschaumstoff aufschäumen und aushärten lässt. Das Einfüllen der erfindungsgemäßen Polyurethanreaktionsmischung in den Ringspalt zwischen Mediumrohr und Mantelrohr erfolgt beispielsweise mittels einer dem Fachmann bekannten Polyurethandosiermaschine.

Das Mediumrohr, welches einen geringeren Durchmesser aufweist als das Mantelrohr ist so innerhalb des Mantelrohres angeordnet, dass sich zwischen Mediumrohr und Mantelrohr ein Ringspalt ausbildet. In diesen Ringspalt wird in dem erfindungsgemäßen Schritt (B) die Polyurethanreaktionsmischung eingefüllt.

Bei dem erfindungsgemäß eingesetzten Mediumrohr handelt es sich im Allgemeinen um ein Stahlrohr mit einem Außendurchmesser von beispielsweise 1 bis 120 cm, bevorzugt 4 bis 110 cm. Die Länge des Mediumrohres beträgt beispielsweise 1 bis 24 Meter, bevorzugt 6 bis 16 Meter. In einer bevorzugten Ausführungsform des erfindungsgemäßen Verfahrens wird als Mantelrohr ein Wickelfalzblech eingesetzt wird.

Das erfindungsgemäß eingesetzte Mantelrohr kann im Allgemeinen jedes dem Fachmann für geeignet erscheinende Material enthalten, beispielsweise einen thermoplastischen Kunststoff, bevorzugt Polyethylen.

Die vorliegende Erfindung betrifft daher bevorzugt das erfindungsgemäße Verfahren, wobei als Mantelrohr ein Rohr auf der Basis von thermoplastischem Kunststoff eingesetzt wird.

Das Mantelrohr weist im Allgemeinen eine Dicke von 1 bis 30 mm auf. Der Innendurchmesser des Mantelrohrs beträgt im Allgemeinen 6 bis 140 cm, bevorzugt 10 bis 120 cm. Die Länge des Mantelrohres beträgt beispielsweise 1 bis 24 Meter, bevorzugt 6 bis 16 Meter.

Das Mantelrohr kann gegebenenfalls aus mehreren Schichten bestehen, die beim Extrusionsvorgang zur Herstellung des Mantelrohres zusammengeführt werden können. Ein Beispiel hierfür ist das Einbringen von mehrlagigen Folien zwischen Polyurethan-Schaumstoff und Mantelrohr, wobei die Folie zur Verbesserung der Sperrwirkung mindestens eine metallische Lage enthält. Geeignete Mantelrohre dieses Typs sind in EP-A-960 723 beschrieben. Diese gegebenenfalls vorliegende zusätzliche Schicht wird bevorzugt bereits in Schritt (A) zusammen mit der Folie eingebracht. Beispielsweise können erfindungsgemäß mehrlagige Folien mit Aluminium als Diffusionssperre eingesetzt werden.

Erfindungsgemäß sind im Allgemeinen alle thermoplastischen Kunststoffe geeignet, die für ein entsprechendes gedämmtes Rohr vorteilhafte Eigenschaften aufweisen. Beispiele für erfindungsgemäß einsetzbare thermoplastische Kunststoffe sind ausgewählt aus der Gruppe bestehend aus Polyethylen, Polypropylen und Mischungen davon, bevorzugt wird Polyethylen eingesetzt.

Zum Einfüllen gemäß Schritt (B) des erfindungsgemäßen Verfahrens kann im Allgemeinen jede dem Fachmann bekannte Vorrichtung, beispielsweise am Markt frei erhältliche Hoch- oder Niederdruckdosiermaschinen, beispielsweise der Firmen Hennecke GmbH, Cannon Deutschland GmbH oder Krauss Maffei Kunststofftechnik GmbH, eingesetzt werden.

Das Doppelrohr aus Mediumrohr und Mantelrohr wird erfindungsgemäß bevorzugt auf einem neigbaren Schäumtisch bereitgestellt, so dass es in einem Winkel von 0° bis 20°, bevorzugt 0° bis 15°, besonders bevorzugt 0° bis 10° geneigt werden kann. Die Enden des Doppelrohres werden bevorzugt mit Abschlusskappen versehen, die mit Entlüftungslöchern ausgestattet sind. Erfindungsgemäß kann das Einfüllen des Polyurethansystems an einem Ende des Rohres durch die Verschlusskappen oder in der Mitte oder an jeder Stelle zwischen einem Ende und der Mitte, jeweils in den dort befindlichen Ringspalt zwischen Mediumrohr und Mantelrohr, beispielsweise durch Anbohrung erfolgen. Die vorliegende Erfindung betrifft daher bevorzugt das erfindungsgemäße Verfahren, wobei das Einfüllen des Polyurethansystems gemäß Schritt (B) an einem Ende des Rohres oder in der Mitte des Rohres oder an jeder Stelle zwischen einem Ende und der Mitte des Rohres erfolgt.

In einer bevorzugten Ausführungsform des erfindungsgemäßen Verfahrens wird die Polyurethanreaktionsmischung in Schritt (B) in der Mitte des Doppelrohrs aus Mediumrohr und Mantelrohr, welches in Schritt (A) bereitgestellt wird, eingefüllt. Das Doppelrohr wird daher in Schritt (A) entsprechend ausgerichtet, beispielsweise waagerecht.

Erfindungsgemäß wird unter Mitte des Rohres ein Bereich verstanden, der bei etwa 35 bis 70%, bevorzugt 40 bis 60%, besonders bevorzugt 45 bis 55% der Länge des Mantelrohres liegt.

Das flüssige Reaktionsgemisch, d. h. das erfindungsgemäße Polyurethansystem fließt während und nach dem Einfüllen in noch flüssiger Form im Spalt hinunter, bis die Polymerisationsreaktion mit Schaumbildung einsetzt. Ab diesem Zeitpunkt findet die weitere Verteilung durch Fließen des langsam in der Viskosität ansteigenden Schaums statt, bis das Material ausreagiert ist.

Als Isocyanate (a) kommen die üblichen aliphatischen, cycloaliphatischen und insbesondere aromatischen Di- und/oder Polyisocyanate zum Einsatz. Bevorzugt verwendet werden Diphenylmethandiisocyanat (MDI) und insbesondere Gemische aus Diphenylmethandiisocyanat und dessen höherkerniger Homologen (Roh-MDI). Die Isocyanate können auch modifiziert sein, beispielsweise durch Einbau von Uretdion-, Carbamat-, Isocyanurat-, Carbodiimid-, Allophanat- und insbesondere Urethangruppen.

Die Isocyanatkomponente (a) kann auch in Form von Polyisocyanatprepolymeren eingesetzt werden. Diese Prepolymere sind aus dem Stand der Technik bekannt. Die Herstellung erfolgt auf an sich bekannte Weise, indem vorstehend beschriebene Polyisocyanate (a), beispielsweise bei Temperaturen von etwa 80 °C, mit Verbindungen mit gegenüber Isocyanaten reaktiven Wasserstoffatomen, bevorzugt mit Polyolen, zu Polyisocyanatprepolymeren umgesetzt werden. Das Polyol-Polyisocyanat-Verhältnis wird im Allgemeinen so gewählt, dass der NCO-Gehalt des Prepolymeren 8 bis 25 Gew.-%, vorzugsweise 10 bis 22 Gew.-%, besonders bevorzugt 13 bis 20 Gew.-% beträgt.

Erfindungsgemäß besonders bevorzugt wird als Isocyanatkomponente eine Mischung aus monomerem Diphenylmethandiisocyanat und dessen höherkerniger Homologen, sogenanntem Polymer-MDI eingesetzt. Solche Isocyanate sind kommerziell erhältlich, beispielsweise von BASF SE unter dem Handelsnamen Lupranat^{®} M20 und Lupranat^{®} M50.

In einer bevorzugten Ausführungsform wird die Isocyanatkomponente (a) so gewählt, dass sie eine Viskosität weniger als 800 mPas, bevorzugt von 100 bis 650, besonders bevorzugt von 120 bis 400, insbesondere von 180 bis 350 mPas, gemessen nach DIN 53019 bei 20 °C, aufweist.

Als Polyole (Bestandteil (b)) kommen im Allgemeinen Verbindungen mit mindestens zwei gegenüber Isocyanat reaktiven Gruppen, das heißt mit mindestens zwei mit Isocyanatgruppen reaktiven Wasserstoffatomen, in Betracht. Beispiele hierfür sind Verbindungen mit OH-Gruppen, SH-Gruppen und/oder NH-Gruppen, bevorzugt OH-Gruppen. Als Polyole (b) kommen bevorzugt Polyesterole und/oder Polyetherole zum Einsatz. Die mittlere Funktionalität der Polyetherole und/oder Polyesterole beträgt im Allgemeinen 1,9 bis 8, bevorzugt 2,4 bis 7, besonders bevorzugt 2,6 bis 6. Dabei wird bei Polyetherolen zur Berechnung der mittleren Funktionalität von der Funktionalität der Startermoleküle ausgegangen. Die Polyole (b) weisen eine Hydroxylzahl von im Allgemeinen größer als 20 mg KOH/g, bevorzugt größer als 30 mg KOH/g, besonders bevorzugt größer als 40 mg KOH/g auf. Als Obergrenze der Hydroxylzahl hat sich im Allgemeinen 700 mg KOH/g, bevorzugt 600 mg KOH/g, besonders 500 mg KOH/g ganz besonders 400 KOH/g bewährt. Die oben angegebenen OH-Zahlen beziehen sich auf die Gesamtheit der Polyole (b), was nicht ausschließt, dass einzelne Bestandteile der Mischung höhere oder niedrigere Werte aufweisen. Dabei ist das zahlenmittlere Molekulargewicht der Polyole (b1) vorzugsweise größer als 400 g/mol.

Bevorzugt enthält Komponente (b) Polyetherpolyole, die nach bekannten Verfahren, beispielsweise durch anionische Polymerisation mit Alkalihydroxiden, wie Natrium- oder Kaliumhydroxid oder Alkalialkoholaten, wie Natriummethylat, Natrium- oder Kaliumethylat oder Kalium-isopropylat als Katalysatoren und unter Zusatz mindestens eines Startermoleküls, das 2 bis 8, vorzugsweise 3 bis 8, reaktive Wasserstoffatome gebunden enthält, oder durch kationische Polymerisation mit Lewis-Säuren, wie Antimonpentachlorid, Borfluorid-Etherat u.a. oder Bleicherde als Katalysatoren aus einem oder mehreren Alkylenoxiden mit 2 bis 4 Kohlenstoffatomen im Alkylenrest hergestellt werden.

Geeignete Alkylenoxide sind beispielsweise Tetrahydrofuran, 1, 3-Propylenoxid, 1,2-bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden. Als Startermoleküle kommen Alkohole in Betracht, wie beispielsweise Glycerin, Trimethylolpropan (TMP), Pentaerythrit, Zuckerverbindungen wie beispielsweise Saccharose, Sorbit, sowie Amine, wie beispielsweise Methylamin, Ethylamin, Isopropylamin, Butylamin, Benzylamin, Anilin, Toluidin, Toluoldiamin (TDA), Naphthylamin, Ethylendiamin (EDA), Diethylentriamin, 4,4'-Methylendianilin, 1,3-Propandiamin, 1,6-Hexandiamin, Ethanolamin, Diethanolamin, Triethanolamin und ähnliche.

Weiterhin können als Startermoleküle Kondensationsprodukte aus Formaldehyd, Phenol und Diethanolamin bzw. Ethanolamin, Formaldehyd, Alkylphenolen und Diethanolamin bzw. Ethanolamin, Formaldehyd, Bisphenol A und Diethanolamin bzw. Ethanolamin, Formaldehyd, Anilin und Diethanolamin bzw. Ethanolamin, Formaldehyd, Kresol und Diethanolamin bzw. Ethanolamin, Formaldehyd, Toluidin und Diethanolamin bzw. Ethanolamin sowie Formaldehyd, Toluoldiamin (TDA) und Diethanolamin bzw. Ethanolamin und ähnliche verwendet werden.

Bevorzugt werden als Startermolekül Glycerin, Saccharose, Sorbit und TDA verwendet.

Erfindungsgemäß wird mindestens ein Treibmittel (c) eingesetzt. Dieses enthält mindestens eine aliphatische, halogenierte Kohlenwasserstoffverbindung (c1), aufgebaut aus 2 bis 5, vorzugsweise 3 oder 4 Kohlenstoffatomen, mindestens einem Wasserstoffatom und mindestens einem Fluor und/oder Chloratom, wobei die Verbindung (c1) mindestens eine Kohlenstoff-Kohlenstoff-Doppelbindung enthält. Geeignete Verbindungen (c1) umfassen Trifluorpropene und Tetrafluorpropene, wie (HFO-1234), Pentafluorpropene, wie (HFO-1225), Chlortrifluorpropene, wie (HFO-1233), Chlordifluorpropenes und Chlorotetrafluorpropene sowie Mischungen aus einer oder mehreren dieser Komponenten. Besonders bevorzugt sind Tetrafluorpropene, Pentafluorpropene und Chlortrifluorpropene, wobei das ungesättigte, terminale Kohlenstoffatom mehr als einen Chlor- oder Fluorsubstituenten trägt. Beispiele sind 1,3,3,3-Tetrafluorpropen (HFO-1234ze); 1,1,3,3-Tetrafluorpropen; 1,2,3,3,3-Pentafluorpropen (HFO-1225ye); 1,1,1-Trifluorpropen; 1,1,1,3,3-Pentafluorpropen (HFO-1225zc); 1,1,1,3,3,3-Hexafluorbut-2-en, 1,1,2,3,3-Pentafluorpropen (HFO-1225yc); 1,1,1,2,3-Pentafluorpropen (HFO-1225yez); 1-Chlor-3,3,3-trifluorpropen (HCFO-1233zd); 1,1,1,4,4,4-Hexafluorbut-2-en oder Mischungen zweier oder mehrerer dieser Komponenten.

Besonders bevorzugte Verbindungen (c1) sind Hydroolefine, ausgewählt aus der Gruppe, bestehend aus Trans-1-chlor-3,3,3-trifluor-propen (HCFO-1233zd(E)), cis-1-Chlor-3,3,3-trifluorpropen (HCFO-1233zd(Z)), trans-1,1,1,4,4,4-Hexafluorbut-2-en (HFO-1336mzz(E)), cis-1,1,1,4,4,4-Hexafluorbut-2-en (HFO-1336mzz(Z)), trans-1,3,3,3-Tetrafluorprop-1-en (HFO-1234ze(E)), cis-1,3,3,3-Tetrafluorprop-1-en (HFO-1234ze(Z)) oder Mischungen einer oder mehrerer Komponenten davon.

Treibmittel (c1) werden vorzugsweise in einer Menge von 1 bis 30 Gew.-%, besonders bevorzugt 2 bis 25 Gew.-% und insbesondere 3 bis 20 Gew.-%, bezogen auf das Gesamtgewicht der Komponenten (b), eingesetzt.

Neben Treibmitteln (c1) können weitere chemische und/oder physikalische Treibmittel (c2) eingesetzt werden. chemische Treibmittel (c2) sind Verbindungen, die mit Isocyanatgruppen unter Abspaltung von Gasen, insbesondere Kohlendioxid bzw. Kohlendioxid und Kohlenmonoxid, reagieren. Zumeist handelt es sich um Wasser und/oder Ameisensäure, vorzugsweise um Wasser.

An Stelle von oder in Kombination mit den chemischen Treibmitteln können auch sogenannte physikalische Treibmittel (c2) eingesetzt werden. Dabei handelt es sich um gegenüber den Einsatzkomponenten inerte Verbindungen, die zumeist bei Raumtemperatur flüssig sind und bei den Bedingungen der Urethanreaktion verdampfen, ausgenommen der Treibmittel (c1). Vorzugsweise liegt der Siedepunkt dieser Verbindungen unter 50°C. Zu den physikalischen Treibmitteln (c2) zählen auch Verbindungen, die bei Raumtemperatur gasförmig sind und unter Druck in die Einsatzkomponenten eingebracht bzw. in ihnen gelöst werden, beispielsweise Kohlendioxid, niedrig siedende Alkane und Fluoralkane.

Die Treibmittel (c2) werden zumeist ausgewählt aus der Gruppe, enthaltend Wasser, Ameisensäure, Alkane und/oder Cycloalkane mit mindestens 4 Kohlenstoffatomen, Dialkylether, Ester, Ketone, Acetale, Fluoralkane mit 1 bis 8 Kohlenstoffatomen, und Tetraalkylsilane mit 1 bis 3 Kohlenstoffatomen in der Alkylkette, insbesondere Tetramethylsilan.

In einer besonders bevorzugten Ausführungsform werden neben den Treibmitteln (c1) vorzugsweise nur chemische Treibmittel (c2) und keine weiteren physikalischen Treibmittel (c2) eingesetzt. Besonders bevorzugt wird als Treibmittel (c2) Wasser eingesetzt, vorzugsweise in einer Menge bis 8 Gew.-%, besonders bevorzugt bis 4 Gew.-% und insbesondere bis 2,5 Gew.- %. Dabei kann auch kein Treibmittel (c2) zugegeben werden. In diesem Fall enthalten die Eingesetzten Komponenten aber aufgrund deren Hygroskopie meist dennoch geringe Mengen an Wasser.

Die eingesetzten Katalysatoren (d) enthalten N,N-Dialkylbenzylamin, wobei als Alkylgruppen vorzugsweise Alkylgruppen mit 1 bis 6 Kohlenstoffatomen, besonders bevorzugt Methyl und/oder Ethylgruppen enthalten sind. Insbesondere wird als N,N-Dialkylbenzylamin N,N-Dimethylbenzylamin (CAS No. 103-83-3) eingesetzt. Dabei beträgt der Anteil an N,N-Dialkylbenzylamin vorzugsweise 0,05 bis 3 Gew.-%, besonders bevorzugt 0,1 bis 2 Gew.-%, ganz besonders bevorzugt 0,2 bis 1 Gew.-% jeweils bezogen auf das Gesamtgewicht der Komponenten (b), (d) und , falls vorhanden (e).

Neben N,N-Dialkylbenzylamin enthalten die Katalysatoren (d) vorzugsweise weitere Verbindungen, die die Reaktion der reaktiven Wasserstoffatome, insbesondere Hydroxylgruppen, enthaltenden Verbindungen der Komponenten (b) mit den Polyisocyanaten (a) stark beschleunigen.

Zweckmäßigerweise verwendet werden basische Polyurethankatalysatoren, beispielsweise tertiäre Amine, wie Triethylamin, Tributylamin, Dimethylbenzylamin, Dicyclohexylmethylamin, Dimethylcyclohexylamin, N,N,N',N'-Tetramethyldiaminodiethylether, Bis-(dimethylaminopropyl)-harnstoff, N-Methyl- bzw. N-Ethylmorpholin, N-Cyclohexylmorpholin, N,N,N',N'-Tetramethylethylendiamin, N,N,N,N-Tetramethylbutandiamin, N,N,N,N-Tetramethylhexandiamin-1,6, Pentamethyldiethylentriamin, Bis(2-dimethylaminoethyl)ether, Dimethylpiperazin, N-Dimethylaminoethylpiperidin, 1,2-Dimethylimidazol, 1-Azabicyclo-(2,2,0)-octan, 1,4.Diazabicyclo.-(2,2,2).octan(Dabco) und Alkanolaminverbindungen, wie Triethanolamin, Triisopropanolamin, N-Methyl- und N-Ethyldiethanolamin, Dimethylaminoethanol, 2-(N,N-Dimethylaminoethoxy)-ethanol, N,N',N"-Tris-(dialkylaminoalkyl)hexahydrotriazine, z.B. N,N',N"-Tris-(dimethylaminopropyl)-s-hexahydrotriazin, und Triethylendiamin. Als Katalysatoren kommen ferner in Betracht: Amidine, wie 2,3-Dimethyl-3,4,5,6-tetrahydropyrimidin, Tetraalkylammoniumhydroxide, wie Tetramethylammoniumhydroxid, Alkalihydroxide, wie Natriumhydroxid und Alkalialkoholate, wie Natriummethylat und Kaliumisopropylat, Alkalicarboxylate sowie Alkalisalze von langkettigen Fettsäuren mit 10 bis 20 C-Atomen und gegebenenfalls seitenständigen OH-Gruppen.

Bevorzugt wird neben dem N,N-Dialkylbenzylamin mindestens ein basischer Polyurethankatalysator verwendet, vorzugsweise aus der Gruppe der tertiären Amine. Besonders bevorzugt ist der Einsatz von Dimethylcyclohexylamin, Triethylamin, Tetramethylhexandiamin, N,N',N"-Tris-(dialkylaminopropyl)-hexahydrotriazine oder 1,4.Diazabicyclo.-(2,2,2)-octan. Insbesondere enthält der Katalysator Dimethylcyclohexylamin. Weiter kann der Katalysator (d) zusätzlich mindestens ein Katalysator aus der Gruppe der Trimerisierungskatalysatoren enthalten, vorzugsweise Amoniumionen- oder Alkalimetallsalze, besonders bevorzugt Ammonium- oder Alkalimetallcarboxylate.

Vorzugsweise verwendet werden 0,001 bis 10 Gew.-Teile, besonders bevorzugt 0,01 bis 7 Gew.-Teile, im speziellen 0,1 bis 5 Gew.-Teile Katalysator bzw. Katalysatorkombination das Gesamtgewicht der Komponenten (b), (d) und, falls vorhanden, (e). Dabei wird die Menge an Katalysator vorzugsweise so gewählt, dass eine Abbindezeit des Schaumstoffs von 80 bis 500 Sekunden, besonders bevorzugt 100 bis 400 und insbesondere 120 bis 300 Sekunden erhalten wird. Diese Abbindezeiten beziehen sich auf 25°C Komponententemperatur und einen Mischdruck von150 bar.

Als Kettenverlängerungs- und/oder Vernetzungsmittel (e), beispielsweise zur Modifizierung der mechanischen Eigenschaften, z. B. der Härte, können Diole und/oder Triole sowie Aminoalkohole mit Molekulargewichten kleiner als 280 g/mol, vorzugsweise 62 bis 250 mg KOH/g, mehr bevorzugt 62 bis 200 mg KOH/g, weiter bevorzugt 62 bis 150 g/mol und insbesondere von 60 bis 130g/mol eingesetzt werden. Dabei sind Kettenverlängerer difunktionell, Vernetzungsmittel weisen eine Funktionalität von 3 und mehr auf. In Betracht kommen beispielsweise aliphatische, cycloaliphatische und/oder araliphatische Diole mit 2 bis 8, vorzugsweise 2 bis 6 Kohlenstoffatomen, wie z. B. Ethylenglykol, 1,2-Propylenglycol, Diethylenglycol, Dipropylenglycol, 1,3-Propandiol, 1,4-Butandiol, 1,6-Hexandiol, o-, m-, p-Dihydroxycyclohexan, Bis-(2-hydroxy-ethyl)-hydrochinon. Ebenso in Betracht kommen aliphatische und cycloaliphatische Triole wie Glycerin, Trimethylolpropan und 1,2,4- und 1,3,5-Trihydroxycyclohexan sowie N, N, N', N'-Tetrakis (2-hydroxypropyl) ethylene-diamine (Quadrol^{®}).

Sofern zur Herstellung des erfindungsgemäßen Polyurethanschaumstoffs Kettenverlängerungsmittel, Vernetzungsmittel oder Mischungen davon Anwendung finden, werden diese zweckmäßigerweise in einer Menge von 0 bis 15 Gew.-%, vorzugsweise von 0 bis 5 Gew.-%, bezogen auf das Gesamtgewicht der Komponenten (b), (d) und (e) eingesetzt. Vorzugsweise enthalten diese Komponenten weniger als 2 Gew.-% und besonders bevorzugt weniger als 1 Gew.-% und insbesondere kein Kettenverlängerungs- und/oder Vernetzungsmittel (e).

Zur Herstellung der erfindungsgemäßen Reaktionsmischung können gegebenenfalls auch noch Hilfs- und Zusatzstoffe (f) eingesetzt werden. Unter Hilfs- und Zusatzstoffen (f) werden die im Stand der Technik bekannten und üblichen Hilfs- und Zusatzstoffe verstanden. Genannt seien beispielsweise oberflächenaktive Substanzen, Schaumstabilisatoren, Zellregler, Füllstoffe, anorganische und organische Thixothropiermittel, Farbstoffe, Pigmente, Flammschutzmittel, Antistatika, Hydrolyseschutzmittel und/oder fungistatisch und bakteriostatisch wirkende Substanzen.

Die vorliegende Erfindung betrifft insbesondere das erfindungsgemäße Verfahren, wobei als Hilfs- und Zusatzstoff (f) zwischen 1 und 25 Gew.-% Flammschutzmittel, bezogen auf das Gesamtgewicht der Komponenten (b), (d), (e) und (f) eingesetzt wird.

Anorganische Thixotropiermittel umfassen Organoschichtsilikate, hydrophobe oder hydrophile pyrogene Kieselsäuren, organischen Thixotropiermitteln umfassen Polyester, Toluylendiamid (TDA) und Derivate davon, flüssigen Thixotropiermittel auf Basis von Harnstoffurethanen, beispielsweise Isophorondiamin (CAS-Nr. 2855-13-2), 2,2'-Dimethyl-4,4'methylenbis(cyclohexylamin) (CASNr.6864-37-5), Diethyltoluoldiamin (CAS-Nr.-68479-98-1), Triethylenglykoldiamin und Polyoxypropylendiamin (CAS-Nr.9046-10-0). Solche Thoxotropiermittel sind beispielsweise in EP 2874808 genannt.

Zur Herstellung der Polyurethan-Hartschaumstoffe werden die Komponenten (a) bis (d) und, falls vorhanden (e) und (f), zu einer Reaktionsmischung vermischt. Vorzugsweise kann dabei im 2-Komponentenverfahren gearbeitet werden, bei den die Komponenten (b), (c), (d) und gegebenenfalls (e) und (f) zu einer Polyolkomponente vermischt werden und anschließend mit dem Polyisocyanat (a) vermischt werden. Dieses Zweikomponentenverfahren hat sich in der Praxis als bevorzugt erwiesen. Alternativ kann auch das Treibmittel (c) ganz oder teilweise erst bei Herstellung der Reaktionsmischung zugegeben werden. Dabei wird im Rahmen der vorliegenden Erfindung unter einer Reaktionsmischung die Mischung der Isocyanate (a) und der gegenüber Isocyanat reaktiven Verbindungen (b) bei Reaktionsumsätzen kleiner 90 %, bezogen auf die Isocyanatgruppen, bezeichnet.

Vorzugsweise werden dabei die Einsatzstoffe (b), (d) und, falls vorhanden, (e) und (f) sowie chemische Treibmittel (c2) so gewählt, dass eine Mischung, bestehend aus diesen Komponenten, im Allgemeinen eine Viskosität aufweist von 200 bis 10000 mPas, bevorzugt 500 bis 9500 mPas, besonders bevorzugt 1000 bis 9000 mPas, ganz besonders bevorzugt 2500 bis 8500 mPas, insbesondere 3100 bis 8000 mPas, jeweils gemessen nach DIN 53019 bei 20 °C.

Im erfindungsgemäßen Verfahren werden Polyisocycanate (a) und die Polyolkomponente bestehend aus den Komponenten: (b), (c), (d), (e) und gegebenenfalls (f) in solchen Mengen zur Umsetzung gebracht, dass der Isocyanatindex in einem Bereich zwischen 90 bis 180, bevorzugt zwischen 95 bis 180, mehr bevorzugt zwischen 100 und 180, besonders bevorzugt zwischen 100 und175 und im speziellen zwischen 105 und 160 liegt. Der Isocyanatindex ist das molare Verhältnis von Isocyanatgruppen zu mit Isocyanatgruppen reaktiven Gruppen multipliziert mit 100. Damit umfasst der erfindungsgemäße Polyurethanschaumstoff auch mit Isocyanuratgruppen modifizierten Polyurethanschaumstoff.

In einer bevorzugten Ausführungsform werden die Komponenten (a) und (b) des Polyurethansystems so gewählt werden, dass der resultierende Schaumstoff eine Druckfestigkeit (bei Rohdichte 60 kg/m³) von größer 0,2 N/mm², bevorzugt größer 0,25 N/mm², besonders bevorzugt grösser 0,3 N/mm², jeweils gemessen nach DIN 53421, aufweist.

Im Allgemeinen beträgt in dem erfindungsgemäßen Verfahren die Gesamteinschussrohdichte von 20 bis 200 kg/m³, vorzugsweise 25 bis weniger als 80 kg/m³, besonders bevorzugt 30 bis weniger als 70 kg/m³, ganz besonders bevorzugt 30 bis weniger als 65 kg/m³ und insbesondere 35 bis weniger als 60 kg/m³. Unter Gesamteinschussrohdichte wird im Allgemeinen die Gesamtmenge an eingefülltem flüssigen Polyurethan-Material bezogen auf das Gesamtvolumen des ausgeschäumten Ringspaltes verstanden.

Das erfindungsgemäße Verfahren kann im Allgemeinen bei jeder dem Fachmann als geeignet erscheinenden Verdichtung erfolgen. Unter Verdichtung versteht man den Quotienten aus der Gesamtfülldichte des Rohrspaltes dividiert durch die freigeschäumte Kernrohdichte bestimmt an einem unverdichteten Schaumkörper.

Bevorzugt betrifft die vorliegende Erfindung das erfindungsgemäße Verfahren, wobei die Umsetzung bei einer Verdichtung von kleiner 4,0, bevorzugt kleiner 3,5, besonders bevorzugt kleiner 3,0 und ganz besonders bevorzugt kleiner 2,5 durchgeführt wird.

Das Aufschäumen und Aushärten erfolgt erfindungsgemäß im Allgemeinen bei einer Komponententemperatur von 18 bis 40 °C, bevorzugt 18 bis 35 °C, besonders bevorzugt 22 bis 30 °C. Das Aufschäumen und Aushärten erfolgt erfindungsgemäß im Allgemeinen bei einer Oberflächentemperatur von 15 bis 50 °C, bevorzugt 20 bis 50 °C, besonders bevorzugt 25 bis 45 °C.

Die dämmende Schicht weist im Allgemeinen eine Dicke von 1 bis 20 cm, bevorzugt 3 bis 20 cm, besonders bevorzugt 5 bis 20 cm auf. In einer weiteren bevorzugten Ausführungsform weist die dämmende Schicht enthaltend Polyurethan-Schaumstoff eine Wärmeleitfähigkeit von weniger als 27 mW/mK, bevorzugt weniger als 26 mW/mK, besonders bevorzugt weniger als 25 mW/mK, ganz besonders bevorzugt weniger als 24 mW/mK, insbesondere weniger als 23 mW/mK, jeweils gemessen nach EN ISO 8497 (bei 50 °C Mitteltemperatur), auf.

Das erfindungsgemäße Verfahren kann auch weitere Schritte umfassen. Beispielsweise kann das gebildete gedämmte Rohr behandelt werden, beispielsweise durch Zuschneiden des kontinuierlich hergestellten und damit im Prinzip endlosen gedämmten Rohres in gewünschte Längen, beispielsweise in Längen von 6, 12 oder 16 m.

In einer besonders bevorzugten Ausführungsform handelt es sich bei dem erfindungsgemäß hergestellten gedämmten Rohr um ein gedämmtes Verbundmantelrohr für erdverlegte Fernwärme- oder Fernkühlnetze, welches die Anforderungen von DIN EN 253:2015-12 erfüllt.

Die erfindungsgemäßen, mit Polyurethanschaumstoff gedämmten Rohre, weisen eine hervorragend geringe Wärmeleitfähigkeit bei hervorragenden mechanischen Eigenschaften, insbesondere einer geringen Sprödigkeit, auch unmittelbar an den Rohrenden, auf.

Im Folgenden wird die Erfindung anhand von Beispielen verdeutlicht.

### Beispiele

Folgende Tabelle 1 zeigt die Bestandteile eines Rohrdämmungssystems für die diskontinuierliche Verarbeitung:

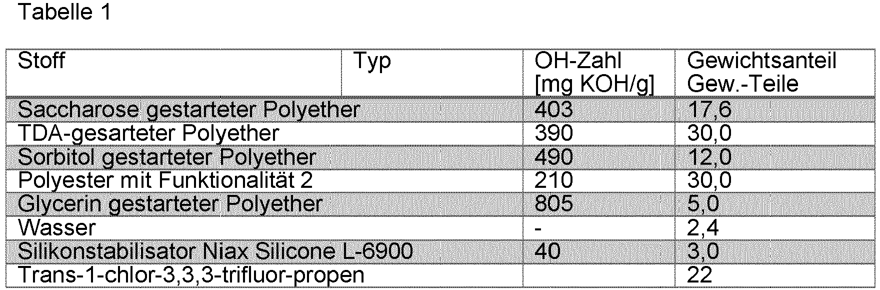

Als Isocyanat wird ein PMDI (Lupranat ^{®} M 20S: NCO-Gehalt: 31,5 %, Funktionalität: 2,7) verwendet. Die Polyolkomponente wird mit dem Isocyanat in einem Massenverhältnis von 100 zu 150 mit einem Handmischer bei einer Komponententemperatur von jeweils 20 °C vermischt. Der Index dieses Schaums liegt bei 152.

Dabei wurden unter Einsatz unterschiedlicher Katalysatorkombinationen Polyurethanschaumstoffe hergestellt. Die Katalysatorkombinationen sind in Tabelle 2 angegeben, alle Angaben sind in Gewichtsteilen.

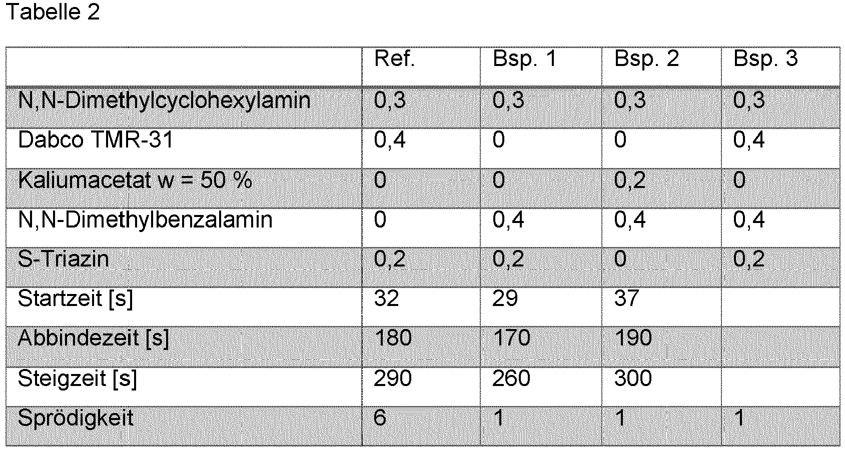

Beispiele 1 bis 3 zeigen gegenüber dem Referenzbeispiel ohne N,N-Dimethylbenzalamin bei ähnlichen Aushärtegeschwindigkeiten deutlich verbesserte Werte für die Sprödigkeit.

Als Maß für die Sprödigkeit des Polyurethan-Hartschaumstoffes wurde die Sprödigkeit direkt nach der Verschäumung durch Drücken des Schaums subjektiv bestimmt (Sprödigkeit subjektiv) und gemäß einem Notensystem von 1 bis 6 beurteilt. 1 bedeutet, dass der Schaum kaum spröde ist, 6 bedeutet, dass der Schaum eine hohe Sprödigkeit aufweist.

Mit den Schaumstoffen gemäß Referenzbeispiel und Beispiel 3 wurden auch Rohre geschäumt. Die Sprödigkeit wurde bei der Entnahme der Endkappe beurteilt und unterschied sich nicht von den freigeschäumten Proben.

## Patentansprüche

1. Verfahren zur Herstellung eines mit Polyurethanschaumstoff gedämmten Rohres, bei dem man
(a) Isocyanat mit
(b) Polyol
(c) Treibmittel, enthaltend mindestens eine aliphatische, halogenierte Kohlenwasserstoffverbindung (c1), aufgebaut aus 2 bis 5 Kohlenstoffatomen, mindestens einem Wasserstoffatom und mindestens einem Fluor und/oder Chloratom, wobei die Verbindung (c1) mindestens eine Kohlenstoff-Kohlenstoff-Doppelbindung enthält,
(d) Katalysator, enthaltend N,N-Dialkylbenzylamin,
(e) gegebenenfalls Kettenverlängerungs- und/oder Vernetzungsmittel und
(f) gegebenenfalls Hilfs- und Zusatzstoffe
zu einer Reaktionsmischung vermischt, wobei der Isocyanatindex zwischen 90 und 180 ist, die Reaktionsmischung auf ein Mediumrohr aufträgt und zum Polyurethanschaumstoff aushärten lässt.

2. Verfahren nach Anspruch 1, **dadurch gekennzeichnet, dass** als Treibmittel (c1) ausgewählt sind aus der Gruppe, bestehend aus Trifluorpropene und Tetrafluorpropene, wie (HFO-1234), Pentafluorpropene, wie (HFO-1225), Chlortrifluorpropene, wie (HFO-1233), Chlordifluorpropenes und Chlorotetrafluorpropene sowie Mischungen aus einer oder mehreren dieser Komponenten.

3. Verfahren nach Anspruch 1, **dadurch gekennzeichnet, dass** als Treibmittel (c1) ausgewählt sind aus der Gruppe, bestehend aus Trans-1-chlor-3,3,3-trifluor-propen (HCFO-1233zd(E)), cis-1-Chlor-3,3,3-trifluorpropen (HCFO-1233zd(Z)), trans-1,1,1,4,4,4-Hexafluorbut-2-en (HFO-1336mzz(E)), cis-1,1,1,4,4,4-Hexafluorbut-2-en (HFO-1336mzz(Z)), trans-1,3,3,3-Tetrafluorprop-1-en (HFO-1234ze(E)), cis-1,3,3,3-Tetrafluorprop-1-en (HFO-1234ze(Z)) oder Mischungen einer oder mehrerer Komponenten davon.

4. Verfahren nach einem der Ansprüche 1 bis 3, **dadurch gekennzeichnet, dass** die Dichte der Rohrdämmung 30 bis 200 kg/m³ beträgt.

5. Verfahren nach einem der Ansprüche 1 bis 4, **dadurch gekennzeichnet, dass** der Anteil von Treibmittel (c1), bezogen auf das Gesamtgewicht der Komponenten (b) und (d) 10 bis 30 Gew.-% beträgt.

6. Verfahren nach einem der Ansprüche 1 bis 5, **dadurch gekennzeichnet, dass** der Anteil von N,N-Dialkylbenzylamin 0,05 bis 3 Gew.-%, bezogen auf das Gesamtgewicht an Polyolen (b) und Katalysator (e) beträgt.

7. Verfahren nach einem der Ansprüche 1 bis 6, **dadurch gekennzeichnet, dass** als N,N-Dialkylbenzylamin N,N-Dimethylbenzylamin eingesetzt wird.

8. Verfahren nach einem der Ansprüche 1 bis 7, **dadurch gekennzeichnet, dass** die Herstellung des gedämmten Rohres bei einem Isocyanatindex von 105 bis 160 erfolgt.

9. Verfahren nach einem der Ansprüche 1 bis 8, **dadurch gekennzeichnet, dass** die Herstellung des gedämmten Rohres erfolgt, indem man
(A) ein Mediumrohr und ein Mantelrohr bereitstellt, wobei das Mediumrohr innerhalb des Mantelrohres angeordnet ist und zwischen Mediumrohr und Mantelrohr ein Ringspalt ausgebildet wird,
(B) die Polyurethanreaktionsmischung nach Anspruch 1 in den Ringspalt gibt und
(C) die Polyurethanreaktionsmischung im Ringspalt zum Polyurethanschaumstoff aufschäumen und aushärten lässt.

10. Mit Polyurethanschaumstoff gedämmtes Rohr, erhältlich nach einem Verfahren gemäß Anspruch 1 bis 9.

11. Verwendung eines mit Polyurethanschaumstoff gedämmten Rohres nach Anspruch 10 als gedämmtes Verbundmantelrohr für erdverlegte Fernwärme- oder Fernkühlnetze.

## Claims

1. A process for producing a pipe insulated with polyurethane foam, wherein
(a) isocyanate is mixed with
(b) polyol,
(c) blowing agent comprising at least one aliphatic, halogenated hydrocarbon compound (c1), made up of from 2 to 5 carbon atoms, at least one hydrogen atom and at least one fluorine and/or chlorine atom, where the compound (c1) comprises at least one carbon-carbon double bond,
(d) catalyst comprising N,N-dialkylbenzylamine,
(e) optionally chain extenders and/or crosslinkers and
(f) optionally auxiliaries and additives,
to give a reaction mixture, where the isocyanate index is in the range from 90 to 180, the reaction mixture is applied to a pipe for media and is allowed to cure to give the polyurethane foam.

2. The process according to claim 1, wherein blowing agents (c1) are selected from the group consisting of trifluoropropenes and tetrafluoropropenes, e.g. (HFO-1234), pentafluoropropenes, e.g. (HFO-1225), chlorotrifluoropropenes, e.g. (HFO-1233), chlorodifluoropropenes and chlorotetrafluoropropenes and also mixtures of one or more of these components.

3. The process according to claim 1, wherein blowing agents (c1) are selected from the group consisting of trans-1-chloro-3,3,3-trifluoropropene (HCFO-1233zd (E)), cis-1-chloro-3,3,3-trifluoropropene (HCFO-1233zd (Z)), trans-1,1,1,4,4,4-hexafluorobut-2-ene (HFO-1336mzz (E)), cis-1,1,1,4,4,4-hexafluorobut-2-ene (HFO-1336mzz (Z)), trans-1,3,3,3-tetrafluoroprop-1-ene (HFO-1234ze (E)), cis-1,3,3,3-tetrafluoroprop-1-ene (HFO-1234ze (Z)) or mixtures of one or more components thereof.

4. The process according to any of claims 1 to 3, wherein the density of the pipe insulation is from 30 to 200 kg/m³.

5. The process according to any of claims 1 to 4, wherein the proportion of blowing agent (c1), based on the total weight of the components (b) and (d), is from 10 to 30% by weight.

6. The process according to any of claims 1 to 5, wherein the proportion of N,N-dialkylbenzylamine is from 0.05 to 3% by weight, based on the total weight of polyols (b) and catalyst (e).

7. The process according to any of claims 1 to 6, wherein N,N-dimethylbenzylamine is used as N,N-dialkylbenzylamine.

8. The process according to any of claims 1 to 7, wherein the production of the insulated pipe is carried out at an isocyanate index of from 105 to 160.

9. The process according to any of claims 1 to 8, wherein the insulated pipe is produced by
(A) providing a pipe for media and an outer pipe, where the pipe for media is arranged within the outer pipe and an annular gap is formed between pipe for media and outer pipe,
(B) introducing the polyurethane reaction mixture according to claim 1 into the annular gap and
(C) allowing the polyurethane reaction mixture to foam and cure in the annular gap to give the polyurethane foam.

10. A pipe insulated with polyurethane foam, obtainable by a process according to any of claims 1 to 9.

11. The use of a pipe insulated with polyurethane foam according to claim 10 as insulated composite wall pipe for district heating or district cooling networks laid in the ground.

## Revendications

1. Procédé de fabrication d'un tuyau isolé avec de la mousse de polyuréthane, dans lequel on mélange
(a) un isocyanate avec
(b) un polyol
(c) un agent de gonflage, contenant au moins un composé hydrocarboné halogéné aliphatique (c1), construit à partir de 2 à 5 atomes de carbone, d'au moins un atome d'hydrogène et d'au moins un atome de fluor et/ou de chlore, le composé (c1) contenant au moins une double liaison carbone-carbone,
(d) un catalyseur, contenant une N,N-dialkylbenzylamine,
(e) éventuellement un agent d'extension de chaînes et/ou de réticulation et
(f) éventuellement des auxiliaires et des additifs pour donner un mélange réactionnel, l'indice d'isocyanate étant compris entre 90 et 180, on applique le mélange réactionnel sur un tuyau moyen et on laisse durcir pour donner de la mousse de polyuréthane.

2. Procédé selon la revendication 1, **caractérisé en ce que** les agents de gonflement (c1) sont choisis dans le groupe constitué par des trifluoropropènes et des tétrafluoropropènes, tels que (HFO-1234), des pentafluoropropènes, tels que (HFO-1225), des chlorotrifluoropropènes, tels que (HFO-1233), des chlorodifluoropropènes et des chlorotétrafluoropropènes, ainsi que des mélanges d'un ou plusieurs de ces composants.

3. Procédé selon la revendication 1, **caractérisé en ce que** les agents de gonflement (c1) sont choisis dans le groupe constitué par le trans-1-chloro-3,3,3-trifluoropropène (HCFO-1233zd(E)), le cis-1-chloro-3,3,3-trifluoropropène (HCFO-1233zd(Z)), le trans-1,1,1,4,4,4-hexafluorobut-2-ène (HFO-1336mzz(E)), le cis-1,1,1,4,4,4-hexafluorobut-2-ène (HFO-1336mzz(Z)), le trans-1,3,3,3-tétrafluoroprop-1-ène (HFO-1234ze(E)), le cis-1,3,3,3-tétrafluoroprop-1-ène (HFO-1234ze(Z)) ou des mélanges d'un ou plusieurs de leurs composants.

4. Procédé selon l'une quelconque des revendications 1 à 3, **caractérisé en ce que** la densité de l'isolation de tuyau est de 30 à 200 kg/m³.

5. Procédé selon l'une quelconque des revendications 1 à 4, **caractérisé en ce que** la proportion d'agent de gonflement (c1), par rapport au poids total des composants (b) et (d) est de 10 à 30 % en poids.

6. Procédé selon l'une quelconque des revendications 1 à 5, **caractérisé en ce que** la proportion de N,N-dialkylbenzylamine est de 0,05 à 3 % en poids, par rapport au poids total de polyols (b) et de catalyseur (e).

7. Procédé selon l'une quelconque des revendications 1 à 6, **caractérisé en ce que** de la N,N-diméthylbenzylamine est utilisée en tant que N,N-dialkylbenzylamine.

8. Procédé selon l'une quelconque des revendications 1 à 7, **caractérisé en ce que** la fabrication du tuyau isolé est réalisée à un indice d'isocyanate de 105 à 160.

9. Procédé selon l'une quelconque des revendications 1 à 8, **caractérisé en ce que** la fabrication du tuyau isolé est réalisée **en ce que**
(A) on met à disposition un tuyau moyen et un tuyau d'enveloppe, le tuyau moyen étant disposé à l'intérieur du tuyau d'enveloppe et une fente annulaire est formée entre le tuyau moyen et le tuyau d'enveloppe,
(B) on place le mélange réactionnel de polyuréthane selon la revendication 1 dans la fente annulaire et
(C) on laisse mousser et durcir le mélange réactionnel de polyuréthane dans la fente annulaire pour donner une mousse de polyuréthane.

10. Tuyau isolé avec de la mousse de polyuréthane, pouvant être obtenu par un procédé selon les revendications 1 à 9.

11. Utilisation d'un tuyau isolé avec de la mousse de polyuréthane selon la revendication 10 en tant que tuyau d'enveloppe composite isolé pour des réseaux de chauffage urbain ou des réseaux de refroidissement urbain enterrés.
